(19) Europäisches Patentamt

European Patent Office

Office européen des brevets

(11) **EP 1 596 156 B1**

(12) **FASCICULE DE BREVET EUROPEEN**

(45) Date de publication et mention
de la délivrance du brevet:
**14.11.2007 Bulletin 2007/46**

(51) Int Cl.:
*G01B 7/287* *(2006.01)*     *G01B 7/28* *(2006.01)*

(21) Numéro de dépôt: **05104003.8**

(22) Date de dépôt: **12.05.2005**

(54) **Machine tridimensionnelle à mesures simultanées**

Dreidimensionale Maschine für simultane Messungen

Three-dimensional measuring machine for simultaneous measurements

(84) Etats contractants désignés:
**DE ES FR GB IT**

(30) Priorité: **12.05.2004 FR 0405141**

(43) Date de publication de la demande:
**16.11.2005 Bulletin 2005/46**

(73) Titulaire: **SNECMA**
**75015 Paris (FR)**

(72) Inventeurs:
• **Beignon, Dominique, Maurice, Gérard**
**95220, Herblay (FR)**
• **Choquet, Pascal, Désiré, Jacques**
**78440, Gargenville (FR)**

• **Gandubert, Joel**
**50270 Surtainville (FR)**
• **Levy, Jean-Jacques**
**75012, Paris (FR)**

(74) Mandataire: **David, Daniel et al**
**Cabinet Bloch & Associés**
**23bis, rue de Turin**
**75008 Paris (FR)**

(56) Documents cités:
• **"LE CONTROLE DES COTES PASSE A LA VITESSE SUPERIEURE" MESURES REGULATION AUTOMATISME, CFE. PARIS, FR, no. 703, mars 1998 (1998-03), pages 87-90, XP000773067 ISSN: 0755-219X**

**Description**

La présente invention concerne les machines à mesurer tridimensionnelles (MMT) utilisées en métrologie pour mesurer les pièces mécaniques de précision.

Ces machines comportent un système à commande numérique du type équipant les machines outils à commande numérique (MOCN), pour commander numériquement un bras articulé. Le bras porte un comparateur et un palpeur qui est mis en contact sur les points de la surface à mesurer, ainsi repérés dans le système de coordonnées rectangulaires du référentiel théorique, ou machine. On connaît des machines multicote de mesure d'une aube par l'article « le contrôle des côtes passe à la vitesse supérieure » Mesures Regulation Automatisme, CFE. PARIS, FR, n° 703, mars 1998, (1998-03) pages 87-90. Il est également connu une machine de mesure tridimensionnelle pour générer une représentation d'un objet par la demande de brevet WO 97/21069.

Pour effectuer la mesure ou le contrôle d'une pièce, on la bride sur la platine de mesure équipant la MMT, ce de façon précise par rapport au référentiel machine ou mécanique. Ce référentiel est matérialisé par un dispositif de la platine, par exemple une surface de référence, sphère ou autre, sur laquelle on vient, lors d'une phase d'initialisation de la machine, faire coïncider le référentiel machine avec le référentiel de la pièce à mesurer avant de lui faire effectuer les mesures.

Le palpeur est ensuite automatiquement et successivement positionné par la machine sur les points à mesurer, et un opérateur relève simultanément et manuellement sur le comparateur les écarts correspondants par rapport aux coordonnées théoriques de ces points.

Ce procédé va bien pour des contrôles simples de pièces peu complexes, lorsqu'il y a peu de points à contrôler ou à mesurer et quand le nombre de pièces à mesurer n'est pas trop élevé.

Mais pour des pièces complexes telles que des aubes de turbomachines, les mesures sont longues et le nombre de pièces à mesurer important. Dans ce cas, le procédé se révèle très coûteux.

C'est dans le but de réduire ces coûts que la Demanderesse a réalisé son invention.

A cet effet l'invention concerne tout d'abord un procédé de mesure tridimensionnelle des coordonnées d'un ensemble de N points prédéterminés de la surface d'une pièce mécanique à mesurer relativement à un référentiel déterminé, et dont on connaît les cosinus directeurs des normales théoriques en les points théoriques correspondant aux dits N points prédéterminés, et comportant :

- une phase préparatoire, dans laquelle on mesure les coordonnées de N points, correspondant aux dits N points prédéterminés, de la surface d'une première pièce mécanique prise pour pièce étalon, relativement au référentiel prédéterminé,
- une phase d'initialisation, dans laquelle on relève N mesures linéaires de déplacement selon lesdites normales, simultanément et respectivement sur lesdits N points de ladite pièce étalon,
- une phase de mesure, dans laquelle on relève N mesures linéaires de déplacement, effectuées simultanément et respectivement sur lesdits N points de la pièce à mesurer correspondant aux N points de ladite pièce étalon,
- une phase de calcul, dans laquelle on calcule les coordonnées tridimensionnelles des N points de la pièce à mesurer à partir des coordonnées tridimensionnelles des N points de ladite pièce étalon, des mesures linéaires, et des cosinus directeurs des N normales théoriques en ces points.

En chaque point, la mesure est effectuée linéairement selon la normale théorique à la surface par un capteur individuel relatif au point, qu'on initialise préalablement séparément des autres capteurs, mais simultanément avec eux, au moyen d'une pièce étalon sur laquelle les mesures ont déjà été effectuées, par le moyen connu de l'art antérieur indiqué ci-dessus.

Les N points à mesurer le sont ainsi simultanément et automatiquement.

Une machine tridimensionnelle à mesures simultanées pour la mise en oeuvre du procédé ci-dessus, comportant un module de calcul, un module de commande et une platine de mesure, comporte au moins une matrice de capteurs de déplacements agencée pour, dans une position ouverte, permettre le montage d'une pièce sur la platine, et dans une position fermée, mettre tous les capteurs en contact opérationnel de mesure de la pièce.

Avantageusement, les capteurs de déplacement sont des capteurs inductifs, qui sont des capteurs robustes bien adaptés au milieu industriel.

Avantageusement encore, le module de calcul est agencé pour calculer des caractéristiques géométriques globales de la surface de la pièce, par exemple les épaisseurs, le vrillage, le flambage, le déport ou le désaxage.

L'invention sera mieux comprise à l'aide de la description suivante de la machine tridimensionnelle à mesures simultanées et du procédé de mesures simultanées de l'invention, en référence au dessin annexé, dans lequel :

- la figure 1 représente une vue en perspective de la machine selon l'invention, en position ouverte ou de montage,
- la figure 2 représente un schéma expliquant le principe de double mesure effectuée au moyen d'un capteur de déplacement et d'une pièce étalon,

- la figure 3 représente une vue en perspective de la machine selon l'invention, en position fermée ou de mesure,
- la figure 4 représente un schéma montrant la réponse caractéristique d'un capteur inductif,
- les figures 5 montrent des schémas expliquant quelques caractéristiques géométriques globales calculées par le module de calcul de l'invention,
- la figure 6 représente un synoptique de fonctionnement du module de calcul, et
- la figure 7 montre un exemple de résultats de calculs fournis par le module de calcul du système de l'invention.

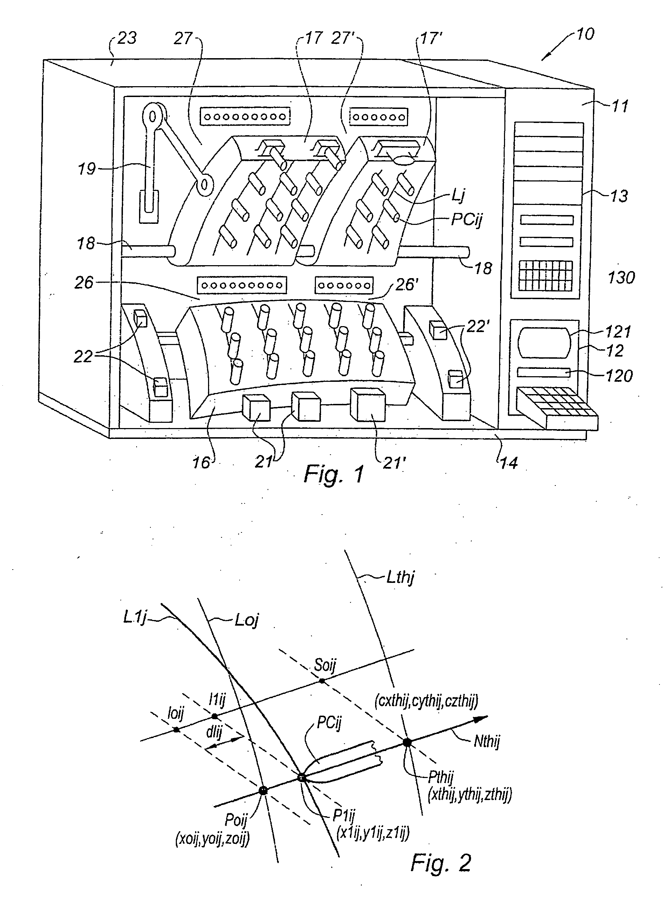

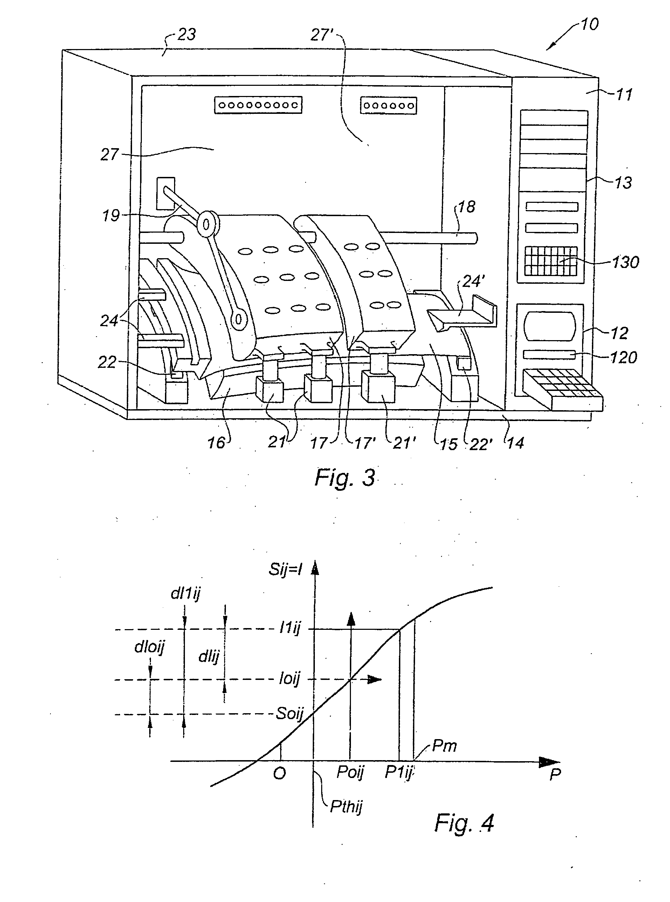

En référence aux figures 1 et 3, la machine 10 tridimensionnelle à mesures simultanées comporte principalement, assemblés sur un bâti 23, un système électronique 11 équipé d'un module 12 de calcul expliqué par la suite, d'un module 13 de commande numérique, d'une platine 14 de mesure pour recevoir une pièce mécanique 15, et des moyens de mesure 16, 17, 17', expliqués ci après.

La pièce 15, soit une d'une première pièce mécanique prise pour pièce étalon, désignée par pièce étalon, soit une pièce mécanique à mesurer, est bridée, par des brides 24, 24', sur des cales 22, 22' de part et d'autre de la platine de mesure 14.

Les moyens de mesure ci-dessus se présentent sous l'aspect de matrices $(i, j)$ avec $i = 1, ..., n$ et $j = 1, ..., m$, de capteurs $C_{ij}$ de déplacements relatifs supportées par des mâchoires, ici dans l'exemple du dessin, une mâchoire inférieure 16 fixée au bâti 23 et deux mâchoires supérieures 17 et 17' pouvant pivoter autour d'un axe 18 solidaire du bâti 23. Les capteurs $C_{ij}$ sont alignés selon des lignes $L_j$ des matrices 16, 17, 17' correspondant à des profils de sections $j$ de la pièce 15.

Le module de commande numérique 13 peut commander, par l'intermédiaire d'un pupitre 130 du module 13, des vérins 19 agencés pour positionner les mâchoires supérieures 17 et 17' soit dans une position ouverte ou de montage, comme sur la figure 1, et permettre le montage préalable de la pièce 15 sur la platine de mesure 14, soit dans une position fermée ou de mesure, et amener ces mâchoires 17, 17' en butée sur des butées 21, 21' réglables, comme montré sur la figure 3.

La forme des matrices 16, 17, 17', la position des capteurs $C_{ij}$ sur les matrices et la hauteur des butées 21, 21' sont dimensionnées pour, en position de mesure, mettre tous les palpeurs $PC_{ij}$ des capteurs $C_{ij}$ de déplacement relatifs en contact opérationnel expliqué ci-après sur les faces l'une inférieure et l'autre supérieure de la pièce 15 montée sur la platine 14.

Les deux faces d'une pièce 15 telle qu'une aube de turbomachine, qu'on désigne sous les noms d'intrados et d'extrados, peuvent ainsi être mesurées simultanément et donner lieu à des mesures globales, comme il sera expliqué plus loin.

Les capteurs $C_{ij}$ de déplacement, en référence aux figures 2 et 4, sont ici des capteurs inductifs comportant chacun un palpeur $PC_{ij}$. En réponse à une position $P_{oi}$ ou $P_{li}$ du palpeur de la ligne $L_{oj}$ ou $L_{lj}$ correspondant à une ligne $L_j$ d'une matrice 16, 17, ou 17', ils délivrent des signaux électriques $S_{ij}$ de mesure pour chaque face de la pièce 15, ici des courants électriques analogiques induits par un noyau aimanté dans une bobine conductrice, qui sont transmis au module de calcul 12 par des liaisons souples 26, 26', 27, 27'depuis les matrices 16, 17, et 17'.

Par contact opérationnel, en référence à la figure 4, il faut comprendre que la position $P$ du palpeur du capteur, qui est solidaire de son noyau, doit être comprise entre deux positions extrêmes $O$ et $P_m$ à l'extérieur desquelles la réponse en courant induit $I$ n'est plus linéaire.

Il faut aussi comprendre que l'axe du palpeur $PC_{ij}$ doit être sensiblement orthogonal à la surface mesurée lorsqu'il est en contact avec elle, de façon à éviter les grippages, ou les usures prématurées, et à simplifier les calculs d'interprétation de la mesure.

Pour cela, on a recours à la définition théorique de la surface, issue de la conception assistée par ordinateur (CAO) comme il est connu de l'art antérieur, et disponible ici sous forme de fichiers informatiques au format CATIA (respecté par le logiciel de CAO distribué par la société EMD). Ces fichiers peuvent être lus sur disque CD (compact disk) par un lecteur-enregistreur CD 120 du module de calcul 12.

Grâce au module 12 et aux fichiers CAO de la pièce 15, le module de calcul 12 en calcule les sections théoriques porteuses des lignes $L_j$ souhaitées sur les matrices 16, 17, 17', les points théoriques $Pth_{ij}$ de ces lignes où les mesures sont souhaitées, et les cosinus directeurs $cxth_{ij}$, $cyth_{ij}$, $czth_{ij}$ des normales $Nth_{ij}$ à la surface théorique en ces points $Pth_{ij}$. Il garde ces données théoriques $DT$ en mémoire ou en écrit un fichier CD par le lecteur enregistreur 120.

Les données théoriques $DT$, sont nécessaires pour réaliser les matrices 16, 17, 17' car elles permettent de localiser la position des capteurs $C_{ij}$ et l'inclinaison dans lesquelles les capteurs $C_{ij}$ doivent se trouver pour effectuer les mesures, donc d'agencer correctement les matrices pour permettre que tous les palpeurs $Pc_{ij}$ respectifs des capteurs $C_{ij}$ de déplacement soient en contact opérationnel en position de mesure. Pour compliqués qu'ils soient, tous ces calculs et la réalisation des matrices 16, 17, 17' nécessitent un savoir-faire n'appartenant cependant qu'à l'art antérieur.

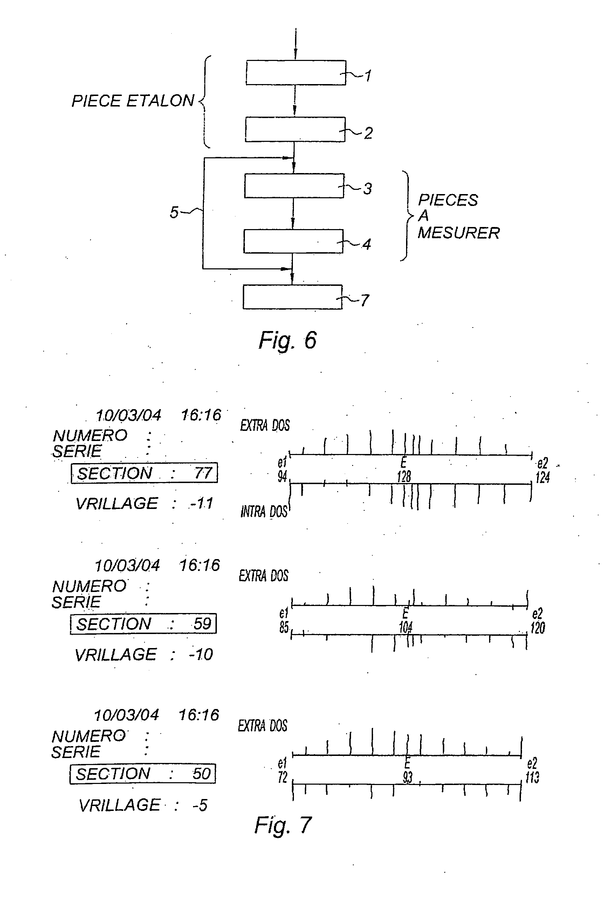

Pour effectuer un relevé précis d'une surface de pièce complexe telle qu'une aube de turbomachine, la machine ci-dessus doit être utilisée selon un procédé particulier de double mesure tridimensionnelle multiple utilisant une première pièce mécanique prise comme étalon qui va maintenant être décrit en référence à la figure 6.

Lors d'une phase préparatoire 1, on mesure les coordonnées xoij, yoij, zoij des N = m.n points Poij sur les lignes Loj correspondant aux lignes Lj et aux positions des capteurs Cij sur ces lignes, de la surface de la première pièce mécanique prise pour pièce étalon relativement à un référentiel Ro prédéterminé, en utilisant par exemple une machine TMM selon le procédé de l'art antérieur expliqué au début du document.

Les cosinus directeurs cxthij, cythij, czthij des normales théoriques Nthij à la dite surface en les points théoriques Pthij issues des données DT et correspondant aux points Poij sont mémorisés dans le module de calcul 12. Ces normales définissent N référentiels théoriques linéaires (Pthij, Nthij), d'origine Pthij et de vecteur unitaire Nthij, attachés respectivement aux N points Pthij, compte tenu qu'en Pthij les capteurs Cij donnent un signal Soij constant mais non connu.

Lors d'une phase d'initialisation 2 du procédé, on positionne la pièce étalon sur la platine de mesure 14 de la machine 10, on commande la fermeture des matrices 17 et 17' par la commande de fermeture accessible sur le pupitre 130, et on relève N mesures linéaires loij des capteurs Cij, effectuées simultanément et respectivement sur lesdits N points Poij de la pièce étalon dans chacun des N référentiels théoriques linéaires, et on mémorise ces N coordonnées loij dans le module de calcul 12.

Il faut remarquer que pour deux capteurs différents Cij, les grandeurs Soij sont différentes. Comme la mesure absolue loij est telle que :

$$loij = Soij + dloij ,$$

on voit que les mesures loij de la pièce ne sont pas effectuées relativement à des origines identiques d'un capteur à l'autre et ne peuvent donc servir pour une reconstitution de profil Lj de la surface de la pièce.

Lors d'une phase de mesure 3 suivante, on remplace la pièce étalon par la pièce à mesurer dans la machine 10 en utilisant le pupitre 130 et la commande d'ouverture et de fermeture des matrices 17 et 17', et on relève N mesures linéaires llij des mêmes capteurs Cij, effectuées simultanément et respectivement sur lesdits N points Plij de la pièce à mesurer dans chacun des N référentiels théoriques linéaires, et on mémorise ces N coordonnées llij dans le module de calcul 12.

La remarque faite précédemment sur loij s'applique, ici aussi, à llij.

Enfin, lors d'une phase 4 suivante de calcul des coordonnées, le module de calcul 12 calcule les coordonnées tridimensionnelles xlij, ylij, zlij de la pièce à mesurer à partir des coordonnées tridimensionnelles xoij, yoij, zoij de la pièce étalon, des mesures loij et llij, et des cosinus directeurs cxthij, cythij, czthij en utilisant la relation qui se déduit de la figure 2:

$$x1ij = xoij - cxthij*dlij$$

avec

$$dlij = (dl1ij + Soij) - (dloij + Soij) = 11ij - loij.$$

De même sont obtenues les autres coordonnées :

$$y1ij = yoij - cythij*dlij$$

$$z1ij = zoij - czthij*dlij$$

Par ces calculs, la reconstruction de profil des sections de la pièce à mesurer est rendue possible et suffisamment précise, au moins pour l'application du procédé aux aubes de turbomachines, puisqu'on parvient à des précisions de la reconstruction de profil de l'ordre du centième de millimètre dans le repère Ro.

Pour mesurer une autre pièce, il est inutile d'exécuter à nouveau la phase d'initialisation : ses résultats restent disponibles dans le module de calcul pour toute une série de pièces à mesurer, autant qu'il est nécessaire.

On remplace seulement la pièce qui vient d'être mesurée par une nouvelle pièce et on relance par la liaison 5 les phases de mesure 3 et de calcul 4 pour obtenir les coordonnées xlij, ylij, zlij de cette nouvelle pièce.

Quand toutes les pièces à mesurer sont traitées, on peut effectuer des calculs complémentaires de caractéristiques géométriques lors d'une phase 7 de calculs globaux. mais ces calculs peuvent aussi avoir lieu lors de la phase 4 de calculs des coordonnées, dans la mesure où l'on n'y effectue pas de statistiques sur l'ensemble des pièces ainsi mesurées.

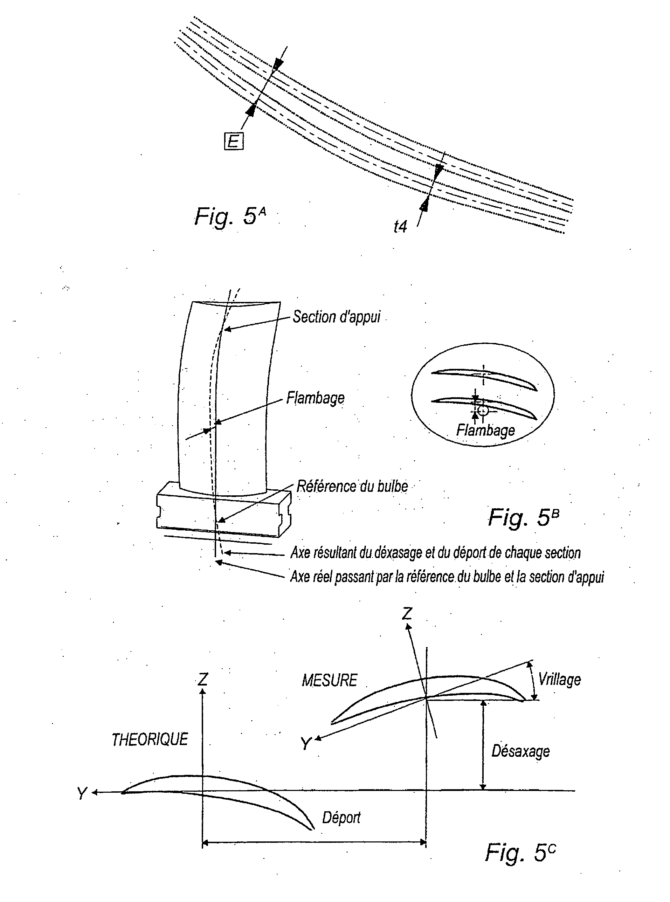

En référence aux figures 5A, 5B, 5C et 7, lors de cette phase, le module de calcul 12 peut calculer les caractéristiques géométriques globales des sections ou des profils j de la surface de la pièce, par exemple les épaisseurs montrées en figure 5A, le flambage montré en figure 5B, le vrillage, le déport, le désaxage, montrés en figure 5C.

Tous ces résultats de calcul du module 12 peuvent être affichés sur un écran 121 ou imprimés au moyen d'une imprimante non représentée.

On a montré en figure 7 un exemple de sortie des résultats de vrillage sur l'imprimante.

## Revendications

**1.** Procédé de mesure tridimensionnelle des coordonnées (xli, yli, zli) d'un ensemble de N points (P1ij) prédéterminés de la surface d'une pièce mécanique à mesurer relativement à un référentiel (Ro) prédéterminé, et dont on connaît les cosinus directeurs (cxthij, cythij, czthij) des normales théoriques (Nthij) en les points théoriques (Pthij) correspondant aux dits N points (P1ij) prédéterminés, et comportant :

- une phase préparatoire (1), dans laquelle on mesure les coordonnées (xoij, yoij, zoij) de N points (Poij), correspondant aux dits N points (P1ij) prédéterminés, de la surface d'une première pièce mécanique prise pour pièce étalon, relativement au référentiel (Ro),
- une phase d'initialisation (2), dans laquelle on relève N mesures linéaires (loij) de déplacement selon lesdites normales (Tthij), simultanément et respectivement sur lesdits N points (Poij) de ladite pièce étalon,
- une phase de mesure (3), dans laquelle on relève N mesures linéaires (llij) de déplacement, effectuées simultanément et respectivement sur lesdits N points (P1ij) de la pièce à mesurer correspondant aux N points (Poij) de ladite pièce étalon,
- une phase de calcul (4), dans laquelle on calcule les coordonnées tridimensionnelles ( xlij, y1ij, z1ij) des N points de la pièce à mesurer à partir des coordonnées tridimensionnelles (xoij, yoij, zoij) des N points de ladite pièce étalon, des mesures linéaires (loij, llij), et des cosinus directeurs (cxthij, cythij, czthij) des N normales théoriques en ces points.

**2.** Procédé selon la revendication 1, dans lequel, en chaque point, la mesure est effectuée linéairement selon la normale théorique par un capteur individuel (Cij) de déplacement relatif au point.

**3.** Procédé selon la revendication 2, dans lequel, chaque mesure de capteur (Cij) est préalablement initialisée séparément des autres capteurs, mais simultanément avec eux.

**4.** Procédé selon la revendication 3, dans lequel, les capteurs (Cij) sont des capteurs inductifs.

**5.** Procédé selon l'une des revendications 1 à 4, dans lequel les coordonnées tridimensionnelles (xoij, yoij, zoij) des N points de la pièce étalon sont mesurées au moyen d'une MMT.

## Claims

**1.** A method for the three-dimensional measurement of coordinates (xli, yli, zli) of a set of N predetermined points (Plij) of the surface of a mechanical part to be measured relatively to a predetermined reference system (Ro), and the direction cosines (cxthij, cythij, czthij) of the theoretical normals (Nthij) thereto are known at the theoretical points (Pthij) corresponding to said N predetermined points (Plij), and including:

- a preparatory phase (1), in which the coordinates (xoij, yoij, zoij) of N points (Poij), corresponding to said N predetermined points (Plij) of the surface of a first mechanical part taken as a standard part, are measured relatively to the reference system (Ro),
- an initialization phase (2), wherein N linear displacement measurements (loij) along said normals (Nthij) are simultaneously and respectively read on said N points (Poij) of said standard part,
- a measurement phase (3), wherein N linear displacement measurements (l1ij), simultaneously and respectively performed on said N points (Plij) of the part to be measured, corresponding to the N points (Poij) of said standard part, are read,

- a computation phase (4), in which the three-dimensional coordinates (xlij, ylij, z1ij) of the N points of the part to be measured are computed from the three-dimensional coordinates (xoij, yoij, zoij) of the N points of said standard part, from the linear measurements (loij, l1ij) and from the direction cosines (cxthij, cythij, czthij) of the N theoretical normals at these points.

2. The method according to claim 1, wherein at each point, the measurement is linearly performed along the theoretical normal by an individual relative displacement sensor (Cij) at the point.

3. The method according to claim 2, wherein each sensor (Cij) measurement is initialized beforehand, separately from that of the other sensors, but simultaneously with them.

4. The method according to claim 3, wherein the sensors (Cij) are inductive sensors.

5. The method according to any of claims 1 to 4, wherein the three-dimensional coordinates (xoij, yoij, zoij) of the N points of the standard part are measured by means of a 3D CMM.

**Patentansprüche**

1. Verfahren zur dreidimensionalen Messung von Koordinaten (xli, yli, zli) einer Gesamtanordnung von vorbestimmten N Punkten (Plij) der Oberfläche eines mechanischen Teils, das in Relation zu einer vorbestimmten Bezugsgröße (Ro) gemessen werden soll und von dem die Leitkosinusse (cxthij, cythij, czthij) der theoretischen Normalen (Nthij) in den theoretischen Punkten (Pthij), die den genannten vorbestimmten N Punkten (Plij) entsprechen, bekannt sind, welches umfasst:

   - eine Vorbereitungsphase (1), in der die Koordinaten (xoij, yoij, zoij) von N Punkten (Poij), die den genannten vorbestimmten N Punkten (Plij) entsprechen, an der Oberfläche eines ersten mechanischen Teils, das als Vergleichsstück genommen wird, in Relation zu der Bezugsgröße (Ro) gemessen werden,
   - eine Initialisierungsphase (2), in der N lineare Messungen (loij) einer Verschiebung auf den genannten Normalen (Nthij) gleichzeitig und jeweils an den N Punkten (Poij) dieses Vergleichsstücks vorgenommen werden,
   - eine Messungsphase (3), in der N lineare Messungen (l1ij) einer Verschiebung vorgenommen werden, die gleichzeitig und jeweils an den N Punkten (P1ij) des zu messenden Teils, die den N Punkten (Poij) dieses Vergleichsstücks entsprechen, erfolgen,
   - eine Berechnungsphase (4), in der die dreidimensionalen Koordinaten (xlij, y1ij, z1ij) der N Punkte des zu messenden Teils aus den dreidimensionalen Koordinaten (xoij, yoij, zoij) der N Punkte des genannten Vergleichsstücks, den linearen Messungen (loij, l1ij) und den Leitkosinussen (cxthij, cythij, czthij) der theoretischen Normalen in diesen Punkten berechnet werden.

2. Verfahren nach Anspruch 1, bei dem die Messung in jedem Punkt linear auf der theoretischen Normalen erfolgt, und zwar durch einen getrennten Fühler (Cij) für eine Verschiebung relativ zu dem Punkt.

3. Verfahren nach Anspruch 2, bei dem jede Messung des Fühlers (Cij) zuvor getrennt von den anderen Fühlern, jedoch gleichzeitig mit diesen initialisiert wird.

4. Verfahren nach Anspruch 3, bei dem die Fühler (Cij) Induktionsfühler sind.

5. Verfahren nach einem der Ansprüche 1 bis 4, bei dem dreidimensionalen Koordinaten (xoij, yoij, zoij) der N Punkte des genannten Vergleichsstücks mittels einer Maschine zur dreidimensionalen Messung gemessen werden.

Fig. 1

Fig. 2

Fig. 3

Fig. 4

Fig. 5^A

Section d'appui

Flambage

Flambage

Référence du bulbe

Fig. 5^B

Axe résultant du déxasage et du déport de chaque section
Axe réel passant par la référence du bulbe et la section d'appui

Z

MESURE

Vrillage

Z

THEORIQUE

Y

Y

Désaxage

Déport

Fig. 5^C

PIECE ETALON

PIECES A MESURER

## Fig. 6

10/03/04    16:16

NUMERO   :
SERIE       :

SECTION   :   77

VRILLAGE  :  -11

EXTRA DOS

e1        E         e2
94       128       124

INTRA DOS

10/03/04    16:16

NUMERO   :
SERIE       :

SECTION   :   59

VRILLAGE  :  -10

EXTRA DOS

e1        E         e2
85       104       120

10/03/04    16:16

NUMERO   :
SERIE       :

SECTION   :   50

VRILLAGE  :  -5

EXTRA DOS

e1        E         e2
72        93       113

## Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9721069 A

**Littérature non-brevet citée dans la description**

- le contrôle des côtes passe à la vitesse supérieure. *Mesures Regulation Automatisme,* Mars 1998, (703), 87-90